# EUROPEAN PATENT APPLICATION

(11) **EP 4 818 280 A1**
(43) Date of publication of application: **07.10.2026**
(21) Application number: 25168682.0
(22) Date of filing: 04.04.2025
(51) Int. Cl.: C09D 175/04, C08G 18/08, C08G 18/70

(54) **WATER-BASED LIQUID APPLIED MEMBRANE**

(71) Applicant: Sika Technology AG, 6340 Baar (CH)
(72) Inventor: AMAKASU, Seitaro, Hiratsuka-shi, 254-0014 (JP)
(74) Representative: Sika Patent Attorneys

(57) **Abstract**

The subject of the invention is a water-based coating composition comprising at least one polyurethane dispersion, at least one polyisocyanate and at least one polysiloxane hybrid dispersion, whereby the weight ratio between the solids content of the polyurethane dispersion and the solids content of the polysiloxane hybrid dispersion is 25/75 to 75/25.

The water-based coating composition is very elastic with a high strength at high elongation together with a high gloss and good resistance against harsh ambient conditions. It is particularly suitable for the waterproofing of a low slope roof without the need to be overcoated with a topcoat.

## Description

### Technical field

Water-based liquid applied membranes with a high strength and a high gloss, suitable as waterproofing coating without the need for a top coat, particularly for low slope roofs.

### Background of the invention

Liquid-applied waterproofing membranes are known. In roofing applications, they are used as an alternative to prefabricated sheet membranes for the sealing of low slope roofs, offering an easier application particularly in the case of complex roof geometries and for refurbishment purposes, providing a flexible seamless roof coating which is fully adhered to the substrate. Water-based products offer the benefit of good workability with low viscosity and easy flow without the addition of volatile organic solvents. However, such products typically need to be covered with a topcoat in order to ensure a tough, resistant surface of the finished membrane with a high robustness against temperature, UV, hydrolysis and mechanical attack. A high gloss of the surface is thereby a typical sign for a highly durable surface with good repellent properties, also in terms of dirt pickup.

US 2003/0088045 describes crack sealing coating systems based on polyurethane dispersions suitable for the use as floor or roof coatings.

Waterborne polysiloxane hybrid resins are known for having good resistance against weathering and good adhesion to several substrates.

### Summary of the invention

The task of the invention is to provide a water-based coating composition with a high strength at high elongation and a highly repellent surface without the need of being overcoated with a topcoat, suitable for the waterproofing of a low slope roof. This task is surprisingly achieved with a water-based coating composition comprising at least one polyurethane dispersion, at least one polyisocyanate and at least one polysiloxane hybrid dispersion in the specific ratio according to claim 1. A coating composition based on a polyurethane dispersion in combination the polyisocyanate enables good mechanical properties with very high strength at high elongation and high initial gloss. But after weathering with UV, temperature and humidity, the initial gloss droppes to an unwanted extent. Such a surface is not robust enough against UV and hydrolysis attack, which makes an overcoating with a top coat necessary. On the other hand, a coating composition based on the polysiloxane hybrid dispersion shows a low strength at only minimal to no elongation. Surprisingly, the inventive combination enables to keep up a high strength at high elongation together with a high gloss after weathering at a weight ratio between the solids content of the polyurethane dispersion and the solids content of the polysiloxane hybrid dispersion of 25/75 to 75/25, as can be seen from Table 1 in the experiments. Out of this ratio range, either the mechanical properties are not good enough, or the gloss is reduced after weathering in an unwanted amount. The inventive water-based coating composition has a low viscosity, good application properties and fast curing properties. It is very elastic with a high strength at high elongation together with a high gloss and good resistance against harsh ambient conditions such as UV, high temperatures and hydrolysis.

The inventive water-based coating composition is particularly suitable for the waterproofing of a roof, a terrace, a balcony or a façade, particularly for the waterproofing of a low slope roof, without the need to be overcoated with a topcoat. This saves a lot of time, material and manpower.

Other aspects of the invention are described in other independent claims. Preferred aspects of the invention are described in dependent claims.

### Detailed description of the invention

The subject of the invention is a water-based coating composition comprising
- at least one polyurethane dispersion,
- at least one polyisocyanate and
- at least one polysiloxane hybrid dispersion,
whereby the weight ratio between the solids content of the polyurethane dispersion and the solids content of the polysiloxane hybrid dispersion is 25/75 to 75/25.

In this document, the term "water-based" refers to a composition which contains the main polymer as a dispersion or emulsion in water and which contains a significant amount of water, typically more than 20 weight-% in relation to the total water-based composition.

In this document, the term "polyurethane dispersion" refers to a polyurethane polymer that forms a storage stable dispersion in water.

In this document, the term "polyurethane" includes all polymers prepared by the so-called diisocyanate polyaddition process. Besides urethane groups they can also contain other groups, particularly urea groups.

In this document, the term "polysiloxane hybrid dispersion" refers to a hybrid polymer comprising polysiloxane units and other polymeric units different from polysiloxanes that forms a storage stable dispersion in water.

In this document, substance names beginning with "poly" such as polyisocyanate or polyol refer to substances containing two or more of the functional groups occurring in their name.

In this document, the term "aliphatic" refers to a substance or polymer which is free of aromatic structures. It may contain cycloaliphatic structures.

The term "storage stable" refers to the ability of a composition to be stored at room temperature in a suitable water-tight container for a certain time interval, in particular several months, without undergoing significant changes in application or end-use properties.

In this document, the term "weight-%" or "wt.%" refers to the mass fraction of a constituent of a composition based on the entire composition, unless stated otherwise. The terms "weight" and "mass" are used synonymously in this document.

In this document "room temperature" refers to a temperature of 23°C.

All industry standards and norms mentioned in this document refer to the versions valid at the time of filing the first application, if not specified.

Particularly preferred is an aliphatic polyether polyurethane dispersion, preferably with a solids content of 30 to 50 weight-%.

Preferred is an anionic polyurethane dispersion, which preferably contains carboxylic anions, preferably with ammonium counterions such as triethylammonium counterions.

Such a polyurethane dispersion is preferably obtained from the reaction of at least one polyether polyol, at least one carboxylic acid, particularly dimethylol propionic acid or dimethylol butanoic acid, and at least one aliphatic diisocyanate, such as for example isophorone diisocyanate, bis(4-isocyanatocyclohexyl)methane, hexane 1,6-diisocyanate, trimethylhexane 1,6-diisocyanate, cyclohexanediiso-cyanates or methylcyclohexanediisocyanates, followed by neutralization of the carboxylic acid groups with a suitable neutralizing agent such as for example triethylamine, followed by dispersing the neutralized isocyanate group containing polymer in water and chain extension by reaction of the isocyanate groups with a chain extender such as for example hydrazine, ethylene diamine, water or other small molecules with at least two reactive groups selected from primary amine groups, secondary amine groups and hydroxyl groups.

The polyurethane dispersion preferably contains some free hydroxyl groups, for example by using at least one hydroxyl-group containing diamine for the chain extention.

Suitable polyurethane dispersions are commercially available, for example as HYDRAN WLS-20 (from DIC), or similar polyurethane dispersions from other companies.

The water-based coating composition further comprises at least one polyisocyanate. Preferred are aliphatic polyisocyanates, particularly isophorone diisocyanate, bis(4-isocyanatocyclohexyl)methane, hexane 1,6-diisocyanate or 1-methyl-2,4(6)-cyclohexane diisocyanate, as well as oligomeric forms of these diisocyanates.

Particularly preferred is an oligomer of hexane 1,6-diisocyanate, particularly an oligmer containing isocyanurate and/or allophanate groups. Such a polyisocyanate is liquid at room temperature, is attractive in terms of EHS properties, has only a moderate reactivity towards water and enables products with good light fastness.

The polyisocyanate may be used as such, or it may be used in hydrophilic form in order to have good emulsifyable properties for the use in water-based compositions. Hydrophilic properties are typically obtained by the addition of emulsifiers. Such hydrophilic polyisocyanates are commercially available, for example under the trade name Bayhydur^{®} (from Covestro), such as Bayhydur^{®} ultra 3100.

Preferably, the polyisocyanate is a hydrophilic emulsifyable polyisocyanate.

The amount of polyisocyanate used in the composition is preferably balanced with the amount of hydroxyl groups which may be contained in the polyurethane dispersion. If this is unknown, it can be determined by trying out different amounts and judging the properties of the obtained cured composition. If too little polyisocyanate is used, the mechanical properties are lower, and if too much polyisocyanate is used, the cured composition tends to show bubbles even up to become a foam.

Preferably, the polyisocyanate is used in such an amount, that the molar NCO/OH ratio is 0.5 to 1.5, preferably 0.7 to 1.2, particularly 0.8 to 1.1

Preferably, the polyisocyanate is used in such an amount, that the weight ratio between the solids content of the polyurethane dispersion and the polyisocyanate is 70/30 to 92/8.

The water-based coating composition further comprises at least one polysiloxane hybrid dispersion.

Preferably, the polysiloxane hybrid dispersion has a solids content of 30 to 50 weight%.

Preferably, the polysiloxane hybrid dispersion has a polysiloxane content of 20 to 35 weight-% based on the total solids content of the polysiloxane hybrid dispersion.

Preferably, the polysiloxane hybrid dispersion is a polysiloxane-acrylic hybrid dispersion, which is preferably urethane-modified.

Such water-based hybrid dispersions are commercially available, for example as CERANATE WHW-822 or CERANATE WSA-1080 (both from DIC). Particularly preferred is CERANATE WHW-822.

The polysiloxane hybrid dispersion is used in such an amount, that the weight ratio between the solids content of the polyurethane dispersion and the solids content of the polysiloxane hybrid dispersion is in the range of 25/75 to 75/25. This enables an attractive combination of a high strength, a high elongation and a high gloss after weathering of the cured coating.

Particularly preferred is a weight ratio between the solids content of the polyurethane dispersion and the solids content of the polysiloxane hybrid dispersion of 40/60 to 70/30, preferably 50/50 to 70/30, particularly 55/45 to 65/35. Such a coating composition has a particularly attractive combination of a high strength, a high elongation and a high gloss after weathering of the cured coating, which enables the use in a highly durable waterproofing system without being overcoated with a topcoat.

The water-based coating composition may contain further ingredients.

Suitable further ingredients are particularly
- fillers, such as ground or precipitated calcium carbonates (chalk), which are optionally surface coated with a fatty acid such as stearate, barium sulfate (barytes), slate, silicates (quartz), magnesiosilicates (talc), alumosilicates (clay, kaolin), dolomite, mica, glass bubbles, silicic acid, particularly fumed silica, carbon black, graphite, microspheres, calcium oxide, calcium hydroxide, aluminium oxide, aluminium hydroxide, magnesium oxide, magnesium hydroxide or zinc oxide,
- pigments, particularly titane dioxides, iron oxides or organic pigments,
- further polymeric dispersions such as acrylic dispersions for example,
- adhesion promoters, particularly organoalkoxy silanes, oligomeric silanes or titanates,
- fibres, particularly glass fibres, carbon fibres, metallic fibres, ceramic fibres, plastic fibres, particularly polyamide fibres or polyethylene fibres, or natural fibres such as wool, cellulose, hemp or sisal,
- nanofibres such as graphene or carbon nanotubes,
- dyes,
- organic solvents,
- plasticizers or coalescing agents, particularly phthalates, hydrogenated phthalates, terephthalates, hydrogenated terephthalates, trimellitates, adipates, azelates, sebacates, citrates, benzoates, glycol ethers, glycol esters, polyether polyols, organic sulfonates or phosphates, polybutenes, polyisobutenes or epoxidized soy or linseed oil,
- thickeners, such as bentonites, derivates of castor oil, hydrogenated castor oil, polyamides, polyamide waxes, polyurethanes, urea compounds, fumed silica, cellulose ethers or hydrophobically modified polyoxyethylenes,
- further additives such as surfactants, wetting agents, defoamers, flow enhancers, levelling agents, deaerating agents, matting agents, antioxidants, biocides or stabilizers against UV or heat.

Preferably, the water-based coating composition further contains at least one pigment, preferably a titanium dioxide, preferably in an amount of 10 to 50 parts by weight, preferably 20 to 30 parts by weight, based on 100 parts by weight of the sum of the solids content of the polyurethane dispersion and of the polysiloxane hybrid dispersion.

Preferably, the water-based coating composition further contains at least one surfactant, wetting agent or defoamer.

Preferably, the water-based coating composition further contains at least one thickener.

Preferably, the water-based coating composition contains less than 5 weight-%, more preferably less than 2 weight-%, particularly less than 1 weight-%, of organic solvents with a boiling point at atmospheric pressure below 250 °C based on the total water-based coating composition.

In a preferred embodiment of the invention, the water-based coating composition contains
- a first component comprising the polyurethane dispersion, the polysiloxane hybrid dispersion and possibly further ingredients, preferably selected from titanium dioxides, surfactants, wetting agents, defoamers and thickeners, and
- a second component comprising or consisting of the polyisocyanate.

Further ingredients may be part of the first and/or part of the second component, or they can be packed as a further component, which is added to the water-based coating composition upon use. Further ingredients which are reactive towards isocyanate groups are preferably contained in the first component, whereas further ingredients which are sensitive to moisture are preferably contained in the second component.

The first and the second component are packed separately, each in a moisture-tight container. The separated first and second component each has a good storage stability. Upon use, the first and the second component are mixed with each other and the mixed composition is being applied. The mixing ratio between the first and the second component is preferably such, that the amount of isocyanate groups in the second component is in an appropriate ratio to hydroxyl groups which are contained in the first component. Preferred is a molar NCO/OH ratio of 0.5 to 1.5, preferably 0.7 to 1.2, particularly 0.8 to 1.1.

Typically, the mixing ratio between the first and the second component is 2/1 to 100/1, preferably 5/1 to 50/1, particularly 10/1 to 40/1.

A further subject of the invention is the use of the water-based coating composition for the waterproofing of a roof, a terrace, a balcony or a façade, particularly for the waterproofing of a low slope roof.

A further subject of the invention is a method of coating comprising the steps of
i) mixing the components of the water-based coating composition to become a macroscopically homogenous fluid,
ii) applying the mixed coating composition onto a substrate in an amount of 0.3 to 1.2 kg/m², preferably 0.4 to 1.0 kg/m², more preferably 0.4 to 0.8 kg/m², followed by
iii) curing the applied coating by evaporation of the volatile ingredients and reaction of isocyanate groups at ambient conditions,
iv) optionally followed by repeating steps i), ii) and iii).

The mixing process can be done with any suitable method, preferably by means of a propeller agitator or similar.

The mixed composition has preferably a low viscosity with self levelling properties.

The mixed composition is preferably applied with a brush, a roller or a spray equipment onto a substrate, preferably onto the surface of a roof, a terrace, a balcony or a façade.

The applied composition cures by evaporation of the volatile ingredients, mainly water, and by the reaction of isocyanate groups, particularly with hydroxyl groups contained in the polyurethane dispersion. Additional isocyanate groups can react with water as well as other reactive ingredients possibly contained in the composition.

Curing typically takes place at ambient conditions, preferably at 5 to 40 °C, more preferably 10 to 30 °C.

After cure, a second layer and possibly a third layer are preferably applied in order to ultimately obtain the desired layer thickness of the cured coating.

Preferred is an application process with two layers.

Another subject of the invention is the cured coating obtained from the method of coating as described.

The cured coating preferably has a layer thickness of 0.2 to 2 mm, preferably 0.3 to 1.5 mm, particularly 0.4 to 1 mm

The cured coating is very elastic with a high strength at high elongation together with a high gloss and good resistance against harsh ambient conditions such as UV, high temperatures and hydrolysis.

Preferably, the cured coating has
- a tensile strength of at least 10 MPa, preferably at least 15 MPa, particularly at least 20 MPa, determined according to JIS A 6021 at a crosshead speed of 500 mm/min with dumbbell-shaped test specimens with a thickness of 0.4 mm and a length of 100 mm at a bridge length of 20 mm and a bridge width of 5 mm after curing for 7 d in standard climate,
- an elongation at break of at least 100 %, preferably at least 150 %, particularly at least 200 %, determined according to JIS A 6021 at a crosshead speed of 500 mm/min with dumbbell-shaped test specimens with a thickness of 0.4 mm and a length of 100 mm at a bridge length of 20 mm and a bridge width of 5 mm after curing for 7 d in standard climate,
- and a 60° gloss of at least 50 %, preferably at least 55 %, more preferably at least 60 %, determined according to JIS K 5600-4-7 with a gloss meter VG 8000 of Nippon Denshoku Industries at an angle of 60° with square specimens of 60 x 60 mm at a thickness of 0.4 mm which after exposure during 1000 h to accelerated weathering with UV, temperature and humidity in an EYE Super UV Tester from Iwasaki.

With these properties, the cured coating is particularly suitable as part of a waterproofing system for the protection of a low slope roof.

Another subject of the invention is a waterproofing system comprising
- optionally a primer and/or an undercoat, and
- the cured coating as described, preferably in a layer thickness of 0.2 to 2 mm, preferably 0.3 to 1.5 mm, particularly 0.4 to 1 mm.

### Examples

The following examples illustrate the present invention without being limitative. "Standard climate" means a temperature of 23±1°C and a relative atmospheric moisture of 50±5%.

### Used substances and abbreviatons:

| | |
|---|---|
| Polyurethane Dispersion | HYDRAN WLS-201, aqueous dispersion of an aliphatic polyether polyurethane, solids content 35 wt.%, from DIC Corporation |
| Polysiloxane Hybrid Disp. | CERANATE WHW-822, urethane-modified polysiloxane-acrylic hybrid dispersion, solids content 35 wt.%, from DIC Corporation |
| Polyisocyanate | Bayhydur^{®} ultra 3100, hydrophilic polyisocyanate based on hexane 1,6-diisocyanate, NCO content 17.4 wt.%, from Covestro |
| Titanium Dioxide | Ti-Pure^{®} R-746, from Chemours |

### Coating Compositions:

### Example E1 to E7:

For each example, a First Component was made by mixing the ingredients given in Table 1 in the given amounts (in parts by weight) and stored in a water-tight container.

As Second Component, the Polyisocyanate is used in the amount as given in Table 1 (in parts by weight).

Upon use, the Second Component was mixed into the First Component to become a macroscopically homogenous liquid, followed by immediately testing the mixed composition as described below.

A cured film of each example was made with a thickness of 0.4 mm by applying a first layer of the mixed composition in an amount of 0.6 kg/m² onto a teflon coated sheet, followed by applying a second layer of the mixed composition in an amount of 0.6 kg/m² onto the first layer after a curing time of the first layer of 24 h in standard climate. After a further drying for 96 in standard climate, the film was removed from the teflon coated sheet, turned upside down and cured for another 72 h in standard climate before the following tests were performed.

The **tensile strength** and the **elongation** at break were determined according to JIS A 6021 at a crosshead speed of 500 mm/min with dumbbell-shaped test specimens with a length of 100 mm at a bridge length of 20 mm and a bridge width of 5 mm punched from the cured film.

The **tear strength** was determined according to JIS A 6021 at a crosshead speed of 500 mm/min with angle shaped test specimens punched from the cured film. The **60° gloss** was determined according to JIS K 5600-4-7 with a gloss meter VG 8000 of Nippon Denshoku Industries at an angle of 60° with square specimens of 60 x 60 mm cut from the cured film. After the **initial** measurement, the specimens were subjected to an accelerated weathering with UV, temperature and humidity in an EYE Super UV Tester from Iwasaki for **1000 h,** followed by another gloss measurement.

The results are given in Table 1.

Reference examples are marked with "**(Ref.)**".

**Table 1: Composition and results of the examples E1 to E7.**

| **Example** | | **E1 (Ref.)** | **E2 (Ref.)** | **E3** | **E4** | **E5** | **E6** | **E7 (Ref.)** |
|---|---|---|---|---|---|---|---|---|
| **First Component:** | | | | | | | | |
| | Polyurethane Dispersion | 87.90 | 73.25 | 65.93 | 52.74 | 43.95 | 21.98 | - |
| | Polysiloxane Hybrid Disp. | - | 14.65 | 21.98 | 35.16 | 43.95 | 65.93 | 87.90 |
| | Titanium Dioxide | 10.00 | 10.00 | 10.00 | 10.00 | 10.00 | 10.00 | 10.00 |
| | thickener | 0.85 | 0.85 | 0.85 | 0.85 | 0.85 | 0.85 | 0.85 |
| | defoamer | 0.50 | 0.50 | 0.50 | 0.50 | 0.50 | 0.50 | 0.50 |
| | pigments | 0.75 | 0.75 | 0.75 | 0.75 | 0.75 | 0.75 | 0.75 |

| **Second Component:** | | | | | | | | |
|---|---|---|---|---|---|---|---|---|
| | Polyisocyanate | 6.00 | 5.00 | 4.50 | 3.60 | 3.00 | 1.50 | - |
| weight ratio PUD/PSHD ¹ | | 100/0 | 83/17 | 75/25 | 60/40 | 50/50 | 25/75 | 0/100 |
| tensile strength [MPa] | | 41.1 | 28.4 | 29.5 | 23.1 | 17.4 | 11.2 | 5.1 |
| elongation | | 508% | 376% | 305% | 265% | 258% | 200% | 8% |
| tear strength [N/mm] | | 74.6 | 72.1 | 65.1 | 56.5 | 52.6 | 47.0 | 14.3 |

| 60° gloss: [%] | | | | | | | | |
|---|---|---|---|---|---|---|---|---|
| | Initial | 80.6 | 78.5 | 75.3 | 75.7 | 72.8 | 75.3 | 71.9 |
| | after 1000 h weathering | 40.5 | 42.8 | 53.3 | 62.9 | 66.7 | 68.2 | 70.0 |

| | | | | | | | | |
|---|---|---|---|---|---|---|---|---|
| ¹ weight ratio between the solids content of the polyurethane dispersion and the solids content of the polysiloxane-acrylic hybrid dispersion | | | | | | | | |

Table 1 shows, that the inventive Examples **E3** to **E6** had a high strength at high elongation together with a high gloss after 1000 h of UV exposure, particularly the preferred Examples **E4** and **E5.** The Reference Examples **E1** and **E2** with no or not enough Polysiloxane Hybrid Dispersion had an unsatisfactory gloss after UV exposure, and the Reference Example **E7** without the Polyurethane Dispersion had an unsatisfactory low strength and elongation.

## Claims

1. Water-based coating composition comprising
- at least one polyurethane dispersion,
- at least one polyisocyanate and
- at least one polysiloxane hybrid dispersion,
whereby the weight ratio between the solids content of the polyurethane dispersion and the solids content of the polysiloxane hybrid dispersion is 25/75 to 75/25.

2. Water-based coating composition according to claim 1, wherein the polyurethane dispersion is an aliphatic polyether polyurethane dispersion, preferably with a solids content of 30 to 50 weight-%.

3. Water-based coating composition according to any of claims 1 or 2, wherein the polyisocyanate is an oligomer of hexane 1,6-diisocyanate.

4. Water-based coating composition according to any of claims 1 to 3, wherein the weight ratio between the solids content of the polyurethane dispersion and the polyisocyanate is 70/30 to 92/8.

5. Water-based coating composition according to any of claims 1 to 4, wherein the polysiloxane hybrid dispersion has a solids content of 30 to 50 weight%.

6. Water-based coating composition according to any of claims 1 to 5, wherein the polysiloxane hybrid dispersion has a polysiloxane content of 20 to 35 weight-% based on the total solids content of the polysiloxane hybrid dispersion.

7. Water-based coating composition according to any of claims 1 to 6, wherein the polysiloxane hybrid dispersion is a polysiloxane-acrylic hybrid dispersion, which is preferably urethane-modified.

8. Water-based coating composition according to any of claims 1 to 7, wherein the weight ratio between the solids content of the polyurethane dispersion and the solids content of the polysiloxane hybrid dispersion is 40/60 to 70/30, preferably 50/50 to 70/30, particularly 55/45 to 65/35.

9. Water-based coating composition according to any of claims 1 to 8, wherein the water-based coating composition further contains at least one pigment, preferably a titanium dioxide, preferably in an amount of 10 to 50 parts by weight based on 100 parts by weight of the sum of the solids content of the polyurethane dispersion and of the polysiloxane hybrid dispersion.

10. Water-based coating composition according to any of claims 1 to 9 containing
- a first component comprising the polyurethane dispersion, the polysiloxane hybrid dispersion and possibly further ingredients, preferably selected from titanium dioxides, surfactants, wetting agents and defoamers, and
- a second component comprising or consisting of the polyisocyanate.

11. Use of the water-based coating composition according to any of claims 1 to 10 for the waterproofing of a roof, a terrace, a balcony or a façade, particularly for the waterproofing of a low slope roof.

12. Method of coating comprising the steps of
i) mixing the components of the water-based coating composition according to any of claims 1 to 10 to become a macroscopically homogenous fluid,
ii) applying the mixed coating composition onto a substrate in an amount of 0.3 to 1.2 kg/m², preferably 0.4 to 1.0 kg/m², more preferably 0.4 to 0.8 kg/m², followed by
iii) curing the applied coating by evaporation of the volatile ingredients and reaction of isocyanate groups at ambient conditions,
iv) optionally followed by repeating steps i), ii) and iii).

13. Cured coating obtained from the method of coating according to claim 12.

14. Cured coating according to claim 13, having
- a tensile strength of at least 10 MPa, preferably at least 15 MPa, particularly at least 20 MPa, determined according to JIS A 6021 at a crosshead speed of 500 mm/min with dumbbell-shaped test specimens with a thickness of 0.4 mm and a length of 100 mm at a bridge length of 20 mm and a bridge width of 5 mm after curing for 7 d in standard climate,
- an elongation at break of at least 100 %, preferably at least 150 %, particularly at least 200 %, determined according to JIS A 6021 at a crosshead speed of 500 mm/min with dumbbell-shaped test specimens with a thickness of 0.4 mm and a length of 100 mm at a bridge length of 20 mm and a bridge width of 5 mm after curing for 7 d in standard climate,
- and a 60° gloss of at least 50 %, preferably at least 55 %, more preferably at least 60 %, determined according to JIS K 5600-4-7 with a gloss meter VG 8000 of Nippon Denshoku Industries at an angle of 60° with square specimens of 60 x 60 mm at a thickness of 0.4 mm which after exposure during 1000 h to accelerated weathering with UV, temperature and humidity in an EYE Super UV Tester from Iwasaki.

15. Waterproofing system comprising
- optionally a primer and/or an undercoat, and
- the cured coating according to any of claims 13 or 14, preferably in a layer thickness of 0.2 to 2 mm, preferably 0.3 to 1.5 mm, particularly 0.4 to 1 mm.
